# EUROPEAN PATENT SPECIFICATION

(11) **EP 0 442 153 B1**
(45) Date of publication and mention of the grant of the patent: **17.08.1994**
(21) Application number: 90200314.4
(22) Date of filing: 12.02.1990
(51) Int. Cl.: B62J 13/04

(54) **Chain casing**
Kettenkasten
Carter à chaîne

(43) Date of publication of application: 21.08.1991
(73) Proprietor: Koga B.V., NL-8445 PD Heerenveen (NL)
(72) Inventor: Gaastra, Andries, NL-8453 JB Oranjewoud (NL)
(74) Representative: Voncken, Bartholomeus Maria Christiaan

(56) References cited:
- DE-A- 3 231 007
- DE-A- 3 317 157
- DE-B- 1 092 790
- US-A- 4 487 424

## Description

The invention relates to a chain casing assembly for a bicycle, such as a bicycle without gears, a sports bicycle or a racing bicycle, at least with an inner casing attachable to the frame of such a bicycle and with an outer casing attachable to the inner casing.

In a known chain casing generally the seal at moving parts, such as the crankshaft or the hub of the rear wheel, is a problem. Although one may choose the passage for the crankshaft as small as possible to limit the entrance of dirt, such a small opening however extremely complicates the mounting of the chain casing. The same applies for an opening for the passage of the hub of the rear wheel.

DE-A-3.317.157 shows a chain casing assembly with a jacket to be mounted onto the bracket housing. The jacket is provided with a circumferential groove for receiving the casing. US-A-4.487.424 illustrates on annular protection disc to be connected to the chain wheel or the pedal crank arm and rotating therewith.

It is an object of the invention to provide a chain casing assembly of the type referred to above which on one hand provides an optimal seal and on the other hand can be mounted easily.

Therefore, in a first aspect the chain casing assembly according to the invention is characterized in accordance with claim 1.

Because the diameter of the opening formed in the outer casing is considerably greater than the diameter of the crankshaft positioning this outer casing around the crankshaft will not offer any problems. Moreover, because of the cooperation between the edge of the opening and the disc-like element mounted on the crankshaft a proper seal will be guaranteed as a result of which the inside of the chain casing, especially the chain, will remain free from contaminations.

Preferably, during use the edge of the opening and the disc-like element are very closely distanced without contacting each other. In this respect it is possible, that a labyrinth seal is provided between the edge of the opening and the disc-like element.

In an alternative embodiment the edge of the opening and the disc-like element engage each other by means of a sealing means, such as made of rubber, or poly-urethane. In such a case it is advantageous if the sealing means is attached to the inner wall of the outer casing and slides along the disc-like element.

If the edge of the opening and the disc-like element engage each other by means of such a sealing means an extremely effective seal is obtained which moreover is very reliable.

Preferably, the disc-like element is constituted by a drive means of the bicycle. For example such a drive means comprises a solidly shaped outer chain wheel of the said bicycle. Obviously, however, other drive means are possible as long as these form a closed disc-like surface.

According to a second aspect of the invention a chain casing assembly as set out in claim 8 is provided. By means of such a disc-like sealing element a very proper seal is obtained between the inner casing and the hub of the rear wheel. For mounting the disc-like sealing element firstly the rear sprocket, or, at a bicycle having a derailleur, the cassette is removed and the disc-like sealing element is slipped over the hub of the rear wheel. Next the sprocket or the cassette, respectively, can be mounted again. Finally the inner casing and the outer casing can be mounted.

A very effective seal is obtained, if the disc-like sealing element is attached to the edge of the opening and slides along the hub. To improve the ease of mounting it is preferred that the disc-like sealing element is releasably attached, as by a fabric with hooked surface, to the inner casing and preferably to the inside thereof.

By means of the easily releasable connection between the disc-like sealing element and the inner casing it is easy to mount or remove, respectively, the inner casing to or from, respectively, the bicycle.

Hereafter the invention will be elucidated by means of the drawing in which an embodiment of the chain casing is illustrated.
Figure 1 shows in a perspective view an embodiment of the chain casing according to the invention in the mounted position;
Figure 2 shows schematically a section according to II-II, and
Figure 3 shows schematically a section according to III-III.

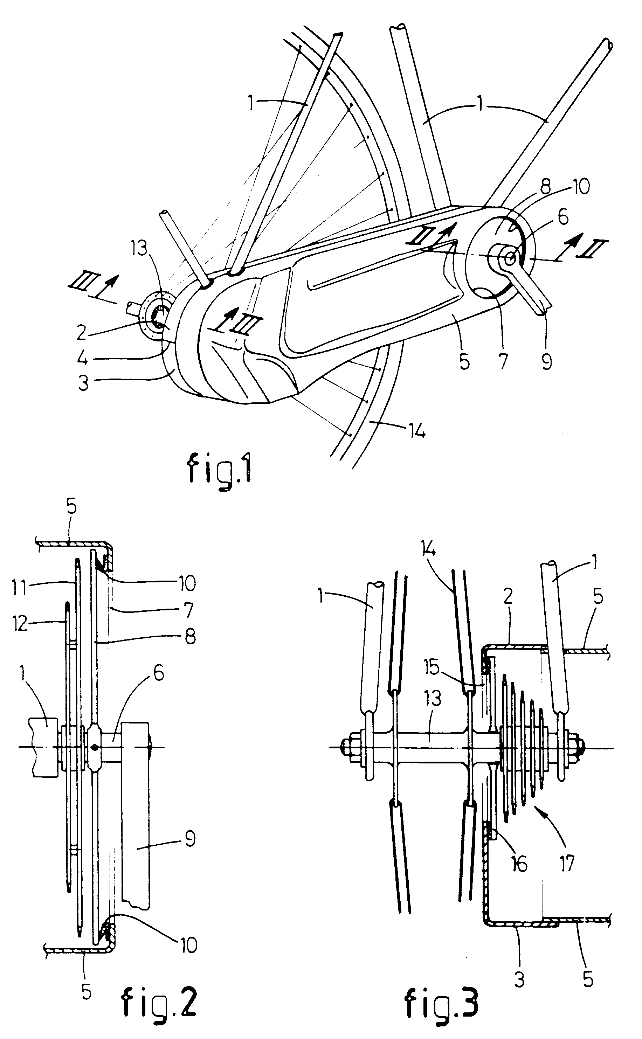

In the embodiment shown in figure 1 the chain casing comprises an inner casing attachable to the frame and being composed of two inner casing sections 2 and 3. The division 4 between both inner casing sections 2, 3 is positioned such that these two inner casing sections 2, 3 can be mounted with ease. The chain casing further comprises an outer casing 5 attachable to the inner casing sections 2 and 3. The way in which the outer casing 5 is attached to the inner casing is known per se and forms no subject of the present invention.

Although according to figure 1 the chain casing forms one closed casing, it is possible that the chain casing is shaped differently. For example it is possible that the chain casing in its mounted position exists of a forward and a rearward chain section connected by funnel shaped sections. The respective sections of the chain extend through these funnel shaped sections. Moreover, it is conceivable that the inner casing sections each in turn are composed of several separate parts, whereas furthermore the possibility exists that the outer casing comprises more than one part. It is only important that a mainly closed chain casing is provided surrounding the driving mechanism of the bicycle. This chain casing can be used on every type of bicycle, such as a bicycle without gears, a sports bicycle or a racing bicycle.

Also the way in which the several parts forming the chain casing, such as both inner casing sections 2, 3 and the outer casing 5, engage each other is known per se and will not be elucidated in this description.

One can clearly see that the outer casing 5 comprises near to the crankshaft 6 an essentially circular opening 7 which extends concentrically with respect to the crankshaft 6. The diameter of the opening 7 is considerably greater than the diameter of the crankshaft 6.

On the crankshaft a disc-like element 8 is provided which sealingly cooperates with the edge of the opening 7.

As a result of the large diameter of the opening 7 mounting the outer casing 5 around the crankshaft 6 is extremely simple, for the crank 9 and the pedal attached thereto can be passed through this opening 7 very easily.

The way in which the disc-like element 8 cooperates sealingly with the edge of the opening 7 may differ. In the illustrated embodiment a sealing means 10 is provided between the disc-like element 8 and the edge of the opening 7.

From the section according to figure 2 it appears that in the illustrated embodiment the sealing means 10 is attached to the inner wall of the outer casing 5 at the edge of the opening 7. The free end of the sealing means 10 sealingly engages the disc-like element 8. During the rotation of the crankshaft 6 the sealing means 10 will therefore slide along the disc-like element 8.

As an alternative it is possible that the sealing means 10 is attached to the disc-like element 8 and slides with respect to the edge of the opening 7 of the outer casing 5. Moreover, a seal is conceivable in which the edge of the opening and the disc-like element are very closely distanced without contacting each other. In such a case already a very proper seal is obtained which, however, may be improved if a labyrinth seal is provided between the edge of the opening and the disc-like element.

Although the figures show that the diameter of the disc-like element 8 is greater than the diameter of the opening 7 in the outer casing 5 this is not strictly necessary. For one may imagine an embodiment in which the sealing means 10 extends inwardly from the circumference of the opening 7 and engages the outer circumference of a disc-like element of which the diameter is smaller than the diameter of the opening 7. With such an embodiment, however, the mounting will become considerably more complicated because acceptable tolerances will be less.

Figure 2 shows that inwardly from the disc-like element 8 two chain wheels 11 and 12 are provided. Of course this number may differ, whereas moreover any other drive means, for example to provide a variable gear, may be provided. Further an embodiment is of importance in which the outermost chain wheel, in this case chain wheel 11, functions as disc-like element, such that the disc-like element 8 may be dispensed with. In such case the sealing means 10 directly engages this outermost chain wheel which then, however, should be entirely closed or should be solidly shaped.

If an embodiment is applied providing a sealing means 10 this sealing means 10 can be made of any appropriate material. Among others one may mention rubber, poly-urethane or the like.

As a further alternative for the illustrated embodiment it is still further conceivable that the disc-like element 8 (or a chain wheel 11 or the like) directly engages the edge of the opening 7 without an intermediary sealing means 10. In such a case, however, the applied materials should fulfil special requirements.

At the hub 13 of the rear wheel 14 of the bicycle the chain casing is shaped according to a second aspect of the invention. As appears from the section according to figure 3 an opening 15 is provided in the divided inner casing which comprises inner casing sections 2 and 3. The diameter of this opening 15 is considerably greater than the diameter of the hub 13 of the rear wheel 14, such that the edge of the opening 15 does not contact this hub 13.

Between the hub 13 and the edge of the opening 15 a disc-like sealing element 16 is provided. In the illustrated embodiment this disc-like sealing element 16 is attached to the inner casing and can move relative to the hub 13. The inner edge of the sealing element 16 cooperating with the hub 13 is shaped such that an optimal seal is obtained.

The connection between the disc-like sealing element 16 and the edge of the opening 15 of the inner casing may be realised in different ways. One possibility comprises the application of a fabric with hooked surface, such as Velcro (registered tradename), such that attaching the sealing element 16 to the inner casing and releasing it is extremely simple.

Further it appears that the sealing element 16 is attached to the inner side of the inner casing. It is possible, however, that the sealing element 16 is attached to the outer side of the inner casing. Moreover, it is possible that the disc-like element is attached to the hub 13 and rotates relative to the inner casing. In such a case a seal is obtained which mainly corresponds with the seal at the crankshaft 6.

For the application of the disc-like sealing element 16 on the hub 13 firstly the sprockets 17 should be removed. After the sealing element 16 has been slid on to the hub 13 the sprockets 17 can be re-attached to the hub 13. Next both inner casing sections 2 and 3 are positioned and the sealing element 16 is connected with both inner casing sections 2, 3, for example by means of Velcro. Finally the outer casing 5 is positioned and connected to the inner casing.

Again the disc-like sealing element 16 can be made of any appropriate material, such as rubber, poly-urethane or the like.

The invention is not restricted to the embodiments described before, which can be varied widely within the scope of the invention as defined by the claims.

## Claims

1. Chain casing assembly for a bicycle, such as a bicycle without gears, a sports bicycle or a racing bicycle, at least with an inner casing (2) attachable to the frame (1) of such a bicycle and with an outer casing (5) attachable to the inner casing, **characterized** in that the outer casing (5) comprises an essentially circular opening (7) meant for concentrically receiving the crankshaft (6) of said bicycle, the diameter of which is considerably greater than the diameter of the crankshaft to be received, whereas the assembly further comprises a disc-like element (8) to be mounted on the crankshaft (6) and meant to cooperate sealingly with the edge of the opening (7).

2. Chain casing assembly according to claim 1, **characterized** in that, during use, the edge of the opening (7) and the disc-like element (8) are very closely distanced without contacting each other.

3. Chain casing assembly according to claim 2, **characterized** in that a labyrinth seal is provided between the edge of the opening and the disc-like element (8).

4. Chain casing assembly according to claim 1, **characterized** in that the edge of the opening and the disc-like element (8) engage each other by means of a sealing means (10), such as made of rubber or poly-urethane.

5. Chain casing assembly according to claim 4, **characterized** in that the sealing means (10) is attached to the inner wall of the outer casing (5) and slides along the disc-like element (8).

6. Chain casing assembly according to one of the claims 1-5, **characterized** in that the disc-like element (8) is constituted by a drive means of the bicycle.

7. Chain casing according to claim 6, **characterized** in that the disc-like element (8) comprises a solidly shaped outer chain wheel of the said bicycle.

8. Chain casing assembly for a bicycle, preferably according to one of the preceding claims, with an inner casing (2, 3) comprising an opening (15) meant for accommodating the hub (13) of the rear wheel (14) and comprising a division (4) extending through said opening (15), **characterized** in that the diameter of the opening (15) is considerably greater than the diameter of the hub (13) to be accommodated, whereas a disc-like sealing element (16), such as made of rubber or poly-urethane, is provided to be positioned between the hub and the edge of the opening (15) to sealingly cooperate therewith.

9. Chain casing assembly according to claim 8, **characterized** in that the disc-like sealing element (16) is attached to the edge of the opening (15) and slides along the hub (13).

10. Chain casing assembly according to claim 9, **characterized** in that the disc-like sealing element (16) is releasably attached, as by a fabric with hooked surface, to the inner casing (2, 3) and preferably to the inside thereof.

## Patentansprüche

1. Kettenkasten für ein Fahrrad, beispielsweise für ein Fahrrad ohne Gangschaltung, eine Sportfahrrad oder ein Rennrad, mit mindestens einem inneren Gehäuse (2), das am Rahmen (1) eines solchen Fahrrads befestigbar ist, und einem äußeren Gehäuse (5), das am inneren Gehäuse befestigbar ist, **dadurch gekennzeichnet**, daß das äußere Gehäuse (5) eine im wesentlichen kreisförmige Öffnung (7) aufweist, die für eine konzentrische Aufnahme der Tretlagerwelle (6) des Fahrrades bestimmt ist und deren Durchmesser beträchtlich größer ist als der Durchmesser der Tretlagerwelle, wobei die Anordnung ferner ein scheibenförmiges Element (8) aufweist, welches auf der Tretlagerwelle (6) befestigbar ist und mit dem Rand der Öffnung (7) dicht zusammenwirkt.

2. Kettenkasten nach Anspruch 1, **dadurch gekennzeichnet**, daß bei der Benutzung des Fahrrades der Rand der Öffnung (7) und das scheibenförmige Element (8) mit sehr kleinem Abstand voneinander ohne sich zu berühren angeordnet sind.

3. Kettenkasten nach Anspruch 2, **dadurch gekennzeichnet**, daß zwischen dem Rand der Öffnung und dem scheibenförmigen Element (8) eine Labyrinthdichtung vorgesehen ist.

4. Kettenkasten nach Anspruch 1, **dadurch gekennzeichnet**, daß der Rand der Öffnung und das scheibenförmige Element (8) über eine Dichtung (10) aus beispielsweise Gummi oder Polyurethan miteinander in Verbindung stehen.

5. Kettenkasten nach Anspruch 4, **dadurch gekennzeichnet**, daß die Dichtung (10) an der Innenseite des äußeren Gehäuses (5) angebracht ist und auf dem scheibenförmigen Element (8) gleitet.

6. Kettenkasten nach einem der Ansprüche 1 bis 5, **dadurch gekennzeichnet**, daß das scheibenförmige Element (8) von einem Antriebsmittel des Fahrrads gebildet wird.

7. Kettenkasten nach Anspruch 6, **dadurch gekennzeichnet**, daß das scheibenförmige Element (8) ein massiv geformtes Kettenrad des Fahrrads aufweist.

8. Kettenkasten für ein Fahrrad, vorzugsweise nach einem der vorangegangenen Ansprüche, mit einem inneren Gehäuse (2, 3) und einer Öffnung (15) für die Durchführung der Radnabe (13) des Hinterrades (14), wobei das Gehäuse eine durch die Öffnung (15) gehende Teilung (4) aufweist, **dadurch gekennzeichnet**, daß der Durchmesser der Öffnung (15) erheblich größer ist als der Durchmesser der dort untergebrachten Radnabe (13), wobei ein scheibenförmiges Dichtungselement (16) aus beispielsweise Gummi oder Polyurethan zwischen der Radnabe und dem Rand der Öffnung (15) angeordnet ist und diesen Bereich abdichtet.

9. Radkasten nach Anspruch 8, **dadurch gekennzeichnet**, daß das scheibenförmige Dichtungselement (16) am Rand der Öffnung (15) befestigt und auf der Nabe (13) gleitet.

10. Kettenkasten nach Anspruch 9, **dadurch gekennzeichnet**, daß das scheibenförmige Dichtungselement (16) lösbar, beispielsweise mit Hilfe eines Klettbandes am inneren Gehäuse (2, 3), vorzugsweise innenseitig, angebracht ist.

## Revendications

1. Assemblage de carter de chaîne pour bicyclette, par exemple bicyclette sans changement de développement, bicyclette sportive ou bicyclette de course, avec au moins un carter intérieur (2) qui peut être fixé au cadre (1) d'une telle bicyclette et avec un carter extérieur (5) qui peut être fixé au carter intérieur, ***caractérisé en ce que*** le carter extérieur (5) comprend une ouverture (7) essentiellement circulaire destinée à recevoir concentriquement l'arbre à manivelle (6) de ladite bicyclette, ouverture dont le diamètre est considérablement plus grand que le diamètre de l'arbre à manivelle à recevoir, l'assemblage comprenant additionnellement un élément (8) en forme de disque à monter sur l'arbre à manivelle (6) et destiné à coopérer en obturation avec le bord de l'ouverture (7).

2. Assemblage de carter de chaîne selon la Revendication 1, ***caractérisé en ce que***, pendant l'utilisation, le bord de l'ouverture (7) et l'élément (8) en forme de disque se trouvent très proches l'un de l'autre sans être en contact.

3. Assemblage de carter de chaîne selon la Revendication 2, ***caractérisé en ce qu***'un joint à labyrinthe est prévu entre le bord de l'ouverture et l'élément (8) en forme de disque.

4. Assemblage de carter de chaîne selon la Revendication 1, ***caractérisé en ce que*** le bord de l'ouverture et l'élément (8) en forme de disque s'emboîtent grâce à un moyen de joint (10), par exemple de caoutchouc ou de polyuréthane.

5. Assemblage de carter de chaîne selon la Revendication 4, ***caractérisé en ce que*** le moyen de joint (10) est fixé à la paroi intérieure du carter extérieur (5) et frotte contre le bord de l'élément (8) en forme de disque.

6. Assemblage de carter de chaîne selon l'une des Revendications 1 à 5, ***caractérisé en*** ce que l'élément (8) en forme de disque est constitué par un moyen d'entraînement de la bicyclette.

7. Assemblage de carter de chaîne selon la Revendication 6, ***caractérisé en ce que*** l'élément (8) en forme de disque comprend un plateau de pédalier externe à forme pleine de ladite bicyclette.

8. Assemblage de carter de chaîne pour bicyclette de préférence selon l'une quelconque des Revendications précédentes, avec un carter intérieur (2,3) comprenant une ouverture (15) destinée à recevoir le moyeu (13) de la roue arrière (14) et comprenant une division (4) s'étendant dans ladite ouverture (15), ***caractérisé en ce que*** le diamètre de l'ouverture (15) est considérablement plus grand que le diamètre du moyeu (13) à recevoir, un élément (16) de joint en forme de disque, par exemple en caoutchouc ou en polyuréthane, étant prévu pour être positionné entre le moyeu et le bord de l'ouverture (15) afin de coopérer en obturation avec eux.

9. Assemblage de carter de chaîne selon la Revendication 8, ***caractérisé en ce que*** l'élément (16) de joint en forme de disque est fixé sur le bord de l'ouverture (15) et frotte contre le moyeu (13).

10. Assemblage de carter de chaîne selon la Revendication 9, **caractérisé en ce que** l'élément (16) de joint en forme de disque est fixé de manière libérable, par exemple par un textile à surface à crochets, sur le carter intérieur (2, 3) et de préférence sur l'intérieur de celui-ci.
